# EUROPÄISCHE PATENTSCHRIFT

(11) **EP 0 466 706 B1**
(45) Veröffentlichungstag und Bekanntmachung des Hinweises auf die Patenterteilung: **04.08.1993**
(21) Anmeldenummer: 90903790.5
(22) Anmeldetag: 03.03.1990
(51) Int. Cl.: A46B 13/02

(54) **ZAHNBÜRSTE MIT VON EINEM ELEKTROMOTORISCHEN ANTRIEBSELEMENT BEWEGTEN BÜRSTENKOPF**
TOOTHBRUSH WITH A HEAD MOVED BY A DRIVE ELEMENT WITH AN ELECTRIC MOTOR
BROSSE A DENTS A TETE MUE PAR UN ELEMENT D'ENTRAINEMENT A MOTEUR ELECTRIQUE

(30) Priorität: 07.04.1989 DE 3911303
(43) Veröffentlichungstag der Anmeldung: 22.01.1992
(73) Patentinhaber: Braun Aktiengesellschaft, Frankfurt am Main (DE)
(72) Erfinder: KIRCHNER, Horst, D-6236 Eschborn (DE)
(74) Vertreter: Vorbeck, Wolfgang Ernst August, Dr.
(86) Internationale Anmeldenummer: DE9000153
(87) Internationale Veröffentlichungsnummer: WO9011703

(56) Entgegenhaltungen:
- DE-A-33 018 655
- DE-A-33 423 74
- DE-A-33 423 74
- US-A- 4 420 851

## Beschreibung

Die Erfindung geht aus von einer Zahnbürste nach der Gattung des Hauptanspruchs. Eine derartige Zahnbürste ist bereits aus der DE-A-33 42 374 bekannt. Dieses Dokument beschreibt eine elektromotorisch angetriebene Zahnbürste mit einem um die Längsachse der Zahnbürste kontinuierlich rotierenden Bürstenkörper. Zum Schutz der Mundhöhle ist der rotierende Bürstenkörper zum Teil durch eine Schutzwand abgedeckt. Um Belastungen der Zahnbürste, die zum Beispiel beim Einklemmen der Zunge zwischen dem rotierenden Bürstenkörper und der Schutzwand auftreten, zu vermeiden, ist die Antriebswelle des Elektromotors durch eine Sicherheitskupplung mit der auswechselbaren Bürste verbunden. Hierzu ist die Antriebswelle axial verschiebbar in der Zahnbürste angeordnet und wird mit einer Spannfeder in einer gewünschten Position festgelegt. Am Ende dieser Antriebswelle ist eine Rasteinrichtung angeordnet, welche in eine entsprechend ausgebildete Rasteinrichtung an dem rotierenden Bürstenkörper eingreift. Wird der rotierende Bürstenkörper aufgrund äußerer Einwirkung in seiner Bewegung gestoppt, so kann die Antriebswelle aufgrund ihrer axialen Verschiebbarkeit aus der rotierenden Bürste ausrasten. Allerdings erweist sich diese Lösung aus verschiedenen Gründen als nachteilig. Zum einen sind die Drehlager aufgrund der Anordnung der Spannfeder in axialer Richtung der Zahnbürste großen axialen Belastungen ausgesetzt. Als Folge hiervon erhöhen sich die Reibungsverluste und der Verschleiß. Zum anderen wird durch die axiale Verschiebbarkeit der Antriebswelle die Bauhöhe der Zahnbürste unnötig erhöht. Darüber hinaus ist die Rastverbindung zwischen der Antriebswelle und dem rotierenden Bürstenkörper einer hohen Abnutzung ausgesetzt, so daß die Sicherheitskupplung eine nur geringe Standzeit aufweist.

Aus der DE-A-33 01 865 ist eine elektrische Zahnbürste bekannt, deren Bürstenkörper wahlweise im Rechts- oder Linkslauf um die Längsachse der Zahnbürste rotieren kann. Die Abtriebswelle des Elektromotors ist über eine Rutschkupplung mit einem Wellenstummel verbunden, der aus dem Vorderteil des Zahnbürstenhandgriffes herausragt und auf den ein Bürstenaufsatz formschlüssig aufsteckbar ist. Nähere Angaben bezüglich des Aufbaus der Rutschkupplung sind dieser Druckschrift nicht zu entnehmen.

Eine elektrische Zahnbürste mit kippbar gelagertem Bürstenkopf ist aus der EP-A-0 173 150 bekannt. Obwohl sich diese Zahnbürsten im großen und ganzen gut bewährt und auch durchgesetzt haben, können sie dennoch in ihrer Handhabung weiter verbessert werden. Ein Problem besteht darin, den Benutzer vor den Folgen einer falschen Handhabung der Zahnbürste zu schützen. Eine falsche Handhabung der Zahnbürste liegt häufig dann vor, wenn der Benutzer in dem Bestreben, eine intensive Reinigungswirkung zu erzielen, die Zahnbürste mit zu hohem Kraftaufwand gegen die Zähne und auch das Zahnfleisch drückt. Diese Handhabung kann zu Verletzungen des Zahnfleisches und anderen, für den Benutzer nachteiligen Folgen führen.

Zur Lösung dieses Problems gibt es bereits Vorschläge, wie zum Beispiel in der DE-C-31 17 160 dargestellt. Bei der Zahnbürste aus dieser Druckschrift wird der Anpreßdruck entweder über eine druckabhängige Bewegung des Schwingantriebes innerhalb des Gehäuses oder über die Durchbiegung des Stiels bzw. über die Stromaufnahme des Motors gemessen und ein Unter- bzw. Überschreiten des optimalen Anpreßdrucks optisch angezeigt. Allerdings erfordern derartige Lösungen einen hohen Aufwand an Meßfühlern und elektrischen Mitteln und konnten sich bisher, soweit ersichtlich, in der Praxis nicht durchsetzen. Außerdem kann der Benutzer die optischen Hinweise nicht beachten und die Zahnbürste weiterhin falsch handhaben.

Darüber hinaus zeigen diese Lösungen keinen Weg auf, auch den Elektromotor der Zahnbürste vor einer Oberlastung zu schützen. Aufgrund der Forderungen nach kleiner Baugröße und geringem Gewicht der Zahnbürste sind die Antriebsmotoren entsprechend dimensioniert und arbeiten im Normalfall im oberen Bereich ihres Leistungsvermögens. Eine unsachgemäße Handhabung der Zahnbürste, beispielsweise durch Anwendung eines zu hohen Anpreßdrucks, kann zu einer Oberlastung des Motors und über längere Zeiträume zu dem Ausfall des Motors führen.

Der Erfindung liegt die Aufgabe zugrunde, eine gattungsgemäße Zahnbürste derart weiterzubilden, daß der Benutzer und die Zahnbürste durch eine verbesserte Drehmoment-Begrenzungseinrichtung vor den Folgen einer unsachgemäßen Handhabung der Zahnbürste geschützt werden. Die Drehmoment-Begrenzungseinrichtung soll eine hohe Lebensdauer sowie eine kleine Bauhöhe aufweisen und nur geringe Reibungsverluste verursachen.

Diese Aufgabe wird durch eine Zahnbürste mit den Merkmalen des Hauptanspruchs gelöst. Dadurch, daß zwischen einer Antriebswelle des Elektromotors und dem Bürstenkopf eine mechanische Drehmoment-Begrenzungseinrichtung mit einem durch ein Federelement in zu einer Drehachse der Drehmoment-Begrenzungseinrichtung im wesentlichen radialer Richtung beaufschlagtes Mitnehmerelement angeordnet ist, wird gewährleistet, daß im Fall der Ausübung einer zu hohen Anpreßkraft des Bürstenkopfes auf die zu reinigenden Zähne die Wirkung der mechanischen Drehmoment-Begrenzungseinrichtung einsetzt und die Kraftübertragung zwischen dem Elektromotor und dem Bürstenkopf unterbrochen ist. Dabei werden durch die radiale Beaufschlagung des Mitnehmerelementes die axiale Belastung der Drehlager reduziert und die Reibungsverluste verringert. Der Bürstenkopf verharrt im Oberlastfall im bewegungslosen Zustand, während der Elektromotor sich unter einer tolerierbaren, durch die mechanische Drehmoment-Begrenzungseinrichtung einstellbaren Last frei dreht. Durch den Stillstand des Bürstenkopfes im Oberlastfall wird eine Schädigung der Zähne und des Zahnfleisches des Benutzers vermieden. Der Benutzer erhält zugleich den deutlichen Hinweis, den Anpreßdruck zu reduzieren. Andererseits wird der Motor durch die Unterbrechung der Kraftübertragung auf den Bürstenkopf vor einer zu hohen Belastung geschützt. Außerdem wird der Einsatz jeglicher zusätzlicher elektrischer Mittel vermieden, was insbesondere bei den vorliegenden Einsatzbedingungen - Feuchtigkeit und Verschmutzung - von Vorteil ist.

Dadurch, daß die Drehmoment-Begrenzungseinrichtung eine erste Kupplungshälfte und eine zweite Kupplungshälfte aufweist, wobei der ersten Kupplungshälfte das wenigstens eine Mitnehmerelement zugeordnet ist, welches gegen eine ringförmige Wand einer topfförmigen Ausnehmung der zweiten Kupplungshälfte gedrückt wird, wird zum einen eine recht geringe Bauhöhe der Drehmoment-Begrenzungseinrichtung und zum anderen ein geringer Verschleiß aufgrund des Verzichts auf Rastausnehmungen gewährleistet. Eine Ausbildung der ringförmigen Wand in Form einer elliptischen Innenumfangslinie ermöglicht eine feinfühlige Einstellbarkeit des maximal zu übertragenden Drehmoments der Drehmoment-Begrenzungseinrichtung über den Grad der Exzentrizität der Ellipse in Verbindung mit der gewählten Federkonstanten des das Mitnehmerelement beaufschlagenden Federelements. Vorteilhaft erweist sich, daß die erste Kupplungshälfte eine im wesentlichen kreisförmige Umfangslinie aufweist und daß die Mittelachse des wenigstens einen Mitnehmerelements und des zugeordneten Federelements auf einer nicht die Drehachse schneidenden Kreissehne angeordnet ist. Hierdurch wird erreicht, daß die auf das Mitnehmerelement wirkende, durch das Federelement erzeugte Kraft nicht ausschließlich in radialer, sondern auch in tangentialer Richtung wirkt. Die tangentiale Kraftkomponente wirkt zum einen als Rückstellkraft zur Einstellung der energetisch günstigsten Position der ersten Kupplungshälfte relativ zur zweiten Kupplungshälfte, so daß ein rasches und definiertes Wiederherstellen der kraftschlüssigen Verbindung der beiden Kupplungshälften nach der Reduzierung des tatsächlichen Anpreßdrucks auf zulässige Werte erreicht wird. Zum anderen wird eine Verkeilung bzw. Verklemmung des Mitnehmerelements zwischen einer Anlagefläche der ersten Kupplungshälfte und der ringförmigen Wand der zweiten Kupplungshälfte bewirkt, sofern die Mittelachse des Mitnehmerelements und zugeordneten Federelements in einem geeigneten Winkel zur ringförmigen Wand geneigt ist. Diese Klemmwirkung erhöht die Wirksamkeit der Drehmoment-Begrenzungseinrichtung in vorteilhafter Weise. Die Anordnung von zwei Mitnehmerelementen auf der ersten Kupplungshälfte in einer 180°-Drehsymmetrie reduziert die Belastung der Drehlager und somit den Verschleiß. Auch die Ausbildung des Mitnehmerelements als Zylinderwalze fördert dadurch eine Verschleißminderung, daß das Mitnehmerelement über seine gesamte axiale Länge an der ringförmigen Wand der topfförmigen Ausnehmung der zweiten Kupplungshälfte anliegt bzw. abrollt. Die Halterung des als Zylinderdruckfeder ausgebildeten Federelements durch einen dornartigen Ansatz erleichtert im wesentlichen die Montage der Drehmoment-Begrenzungseinrichtung und sorgt gleichzeitig für eine definierte Lage des Federelements in der Drehmoment-Begrenzungseinrichtung nach dem Zusammenbau. Die Zuordnung eines ratschenartigen Ansatzes zu einer der Kupplungshälften, der mit einer nutförmigen Ausnehmung an der anderen Kupplungshälfte im Falle der Drehmomentbegrenzung zur Geräuscherzeugung zusammenwirkt, hat die vorteilhafte Wirkung, daß das Wirksamwerden der Drehmoment-Begrenzungseinrichtung auch durch ein akustisches Signal begleitet wird. Hierdurch wird der Benutzer angehalten, den Anpreßdruck und damit das von der Zahnbürste abzugebende Drehmoment zu reduzieren, sofern er dies nicht bereits aufgrund des Verharrens des Bürstenkopfes im bewegungslosen Zustand tut. Weitere Vorteile der Erfindung ergeben sich aus der nachfolgenden Beschreibung der Ausführungsbeispiele in Verbindung mit der Zeichnung.

Es zeigen:
- Fig. 1: eine Prinzipdarstellung:
a) einen Längsschnitt durch die Drehachse der Drehmoment-Begrenzungseinrichtung,
b) einen Querschnitt A-A durch die Drehmoment-Begrenzungseinrichtung;
- Fig. 2: Ansichten der ersten Kupplungshälfte 10:
a) eine Draufsicht aus Blickrichtung x,
b) einen Längsschnitt B-B,
c) eine Untenansicht entgegen Blickrichtung x;
- Fig. 3: Ansichten der zweiten Kupplungshälfte 11:
a) eine Draufsicht aus Blickrichtung x,
b) einen Längsschnitt C-C,
c) eine Untenansicht entgegen Blickrichtung x.

Mit der Bezugsziffer 15 ist die Drehmoment-Begrenzungseinrichtung bezeichnet, welche aus einer ersten Kupplungshälfte 10 und einer zweiten Kupplungshälfte 11 zusammengesetzt ist. Beide Kupplungshälften 10, 11 drehen sich um eine gemeinsame Drehachse 40. Die erste Kupplungshälfte 10 weist antriebsseitig eine Ringwand 20 mit einer Innenverzahnung 21 auf, die mit einem Zahnrad 22 eines elektromotorischen Antriebselements 12 kämmt. Auf der der Ringwand 20 abgewandten Seite weist die erste Kupplungshälfte 10 einen zylindrischen Zapfen 41 auf, in den zwei Kammern 18, 19 eingelassen sind. Die Mittelachsen der Kammern 18, 19 kommen mit Kreissehnen des zylinderförmigen Zapfens 41 zur Deckung, welche nicht die Drehachse 40 schneiden. Die Kammern 18, 19 dienen zur Aufnahme von Federelementen 16, 17, die im vorliegenden Ausführungsbeispiel als zylindrische Druckfedern ausgebildet sind und im wesentlichen in zur Drehachse 40 radialer Richtung wirken. Die Federelemente 16, 17 beaufschlagen Mitnehmerelemente 13, 14, die durch die Federkraft gegen die Innenfläche einer ringförmigen Wand 28 der zweiten Kupplungshälfte 11 gepreßt werden. Die Mitnehmerelemente können als Kugeln oder bevorzugt auch als Zylinderwalzen bzw. Zylinderrollen ausgebildet sein. Die ringförmige Wand 28 bildet die Seitenwand einer topfförmigen Ausnehmung 29 in dem der ersten Kupplungshälfte 10 zugewandten Bereich der zweiten Kupplungshälfte 11. Die Innenumfangslinie 30 der topfförmigen Ausnehmung 29 ist bevorzugt als Ellipse ausgebildet, wogegen die Außenumfangslinie 31 des Zapfens 41 kreisförmige Gestalt annimmt. Auf der der topfförmigen Ausnehmung 29 abgewandten Seite der zweiten Kupplungshälfte 11 ist ein Abtriebsexzenter 23 angeordnet, der auf in der Figur nicht dargestellte Weise mit einem nicht näher spezifizierten Getriebe 25 zusammenwirkt. Das Getriebe 25 setzt abtriebsseitig einen Bürstenkopf 26 in Bewegung. Es ist für die Erfindung unerheblich, welche Bewegungen im einzelnen der Bürstenkopf 26 ausführt, es kann sich um eine rotierende, oszillierende, elliptische oder auch Hubbewegung, oder eine Kombination dieser Bewegungsformen handeln. Wesentlich ist, daß zwischen dem elektromotorischen Antriebselement 12 und dem Bürstenkopf 26 eine mechanische Drehmoment-Begrenzungseinrichtung 15 mit einem durch ein Federelement 16, 17 beaufschlagtes Mitnehmerelement 13, 14 angeordnet ist. Die beschriebene Drehmoment-Begrenzungseinrichtung 15 arbeitet wie folgt:

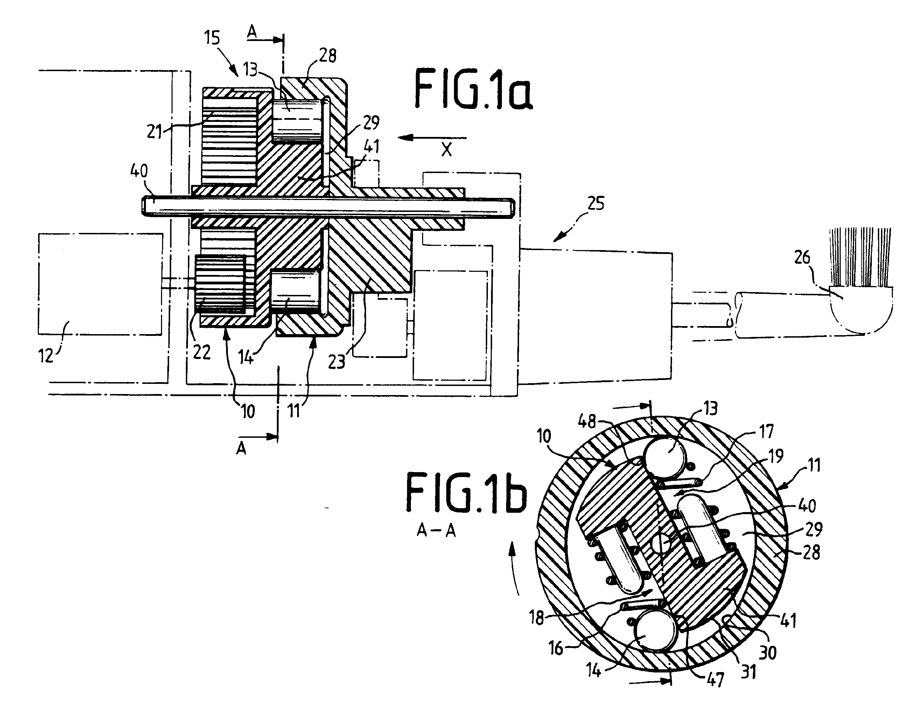

Im Falle keiner oder nur geringer Belastung des Bürstenkopfs 26 ist das durch die Drehmoment-Begrenzungseinrichtung 15 zu übertragende Drehmoment gering. Die erste Kupplungshälfte 10 und die zweite Kupplungshälfte 11 nehmen dann zueinander eine solche Positionierung ein, daß die Mitnehmerelemente 13, 14 in etwa auf der großen Halbachse der elliptischen Innenumfangslinie 30 zu liegen kommen. Dadurch, daß die auf die Mitnehmerelemente 13, 14 wirkende Kraft der Federelemente 16, 17 aufgrund der nicht ausschließlichen, sondern nur im wesentlichen radialen Anordnung der Kammern 18, 19 auch eine zur Drehachse 40 tangential wirkende Kraftkomponente erfährt, wird in jeder Positionierung der ersten Kupplungshälfte 10 relativ zur zweiten Kupplungshälfte 11 für eine ständig wirkende Rückstellkraft gesorgt. Diese Rückstellkraft bewirkt, daß die beiden Kupplungshälften zueinander immer die energetisch günstigste Position einnehmen. Durch die nicht radiale Anordnung der Kammern tritt zusätzlich eine Verkeilung bzw. Verklemmung des Mitnehmerelements 13, 14 zwischen einem Kammerseitenwandbereich 48, 47 und der Innenwand der Ringwand 28 ein, sofern die Drehung der Drehmoment-Begrenzungseinrichtung 15, wie in Fig. 1b dargestellt, im Uhrzeigersinn erfolgt. Dadurch ist die Drehmoment-Begrenzungseinrichtung auch für den Fall einer kreisförmigen Innenumfangslinie 30 der ringförmigen Wand 28 wirksam.

Eine Erhöhung des von der Zahnbürste abzugebenden Drehmoments durch Verstärkung beispielsweise des Anpreßdrucks des Bürstenkopfs 26 gegen die zu reinigenden Zähne, führt zu einer relativen Verdrehung der ersten Kupplungshälfte 10 gegenüber der zweiten Kupplungshälfte 11 in Richtung der kleinen Halbachse der elliptischen Innenumfangslinie 30 und zu einer Verkürzung der als Zylinderdruckfedern ausgebildeten Federelemente 16, 17. Überschreitet das abgerufene Drehmoment aufgrund beispielsweise eines zu hohen Anpreßdrucks des Bürstenkopfes 26 gegen die zu reinigenden Zähne einen maximalen, einstellbaren Wert, führt dies zu einer Verdrehung der Mitnehmerelemente 13, 14 der ersten Kupplungshälfte 10 über die kleine Halbachse der elliptischen Innenumfangslinie 30 hinaus und somit zu einer Rotation der ersten Kupplungshälfte 10 gegenüber der im bewegungslosen Zustand verharrenden zweiten Kupplungshälfte 11. Der Bürstenkopf 26 kommt dann zum Stillstand. Wird das abgerufene Drehmoment wieder reduziert, beispielsweise weil der Benutzer aufgrund der Nichtbewegung des Bürstenkopfes 26 eine unsachgemäße Handhabung der Zahnbürste erkennt, wird die zweite Kupplungshälfte 11 wieder in Drehbewegung versetzt, so daß auch der Bürstenkopf 26 die erwünschte Putzbewegung ausführt.

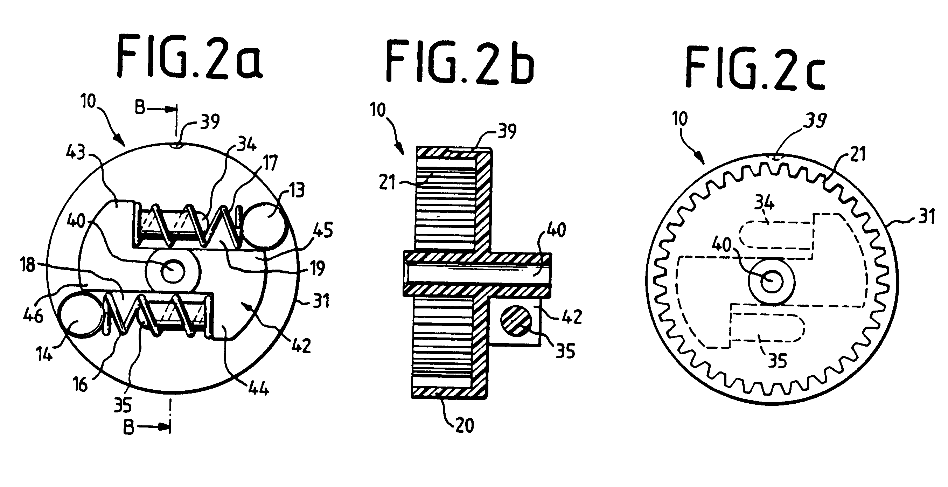

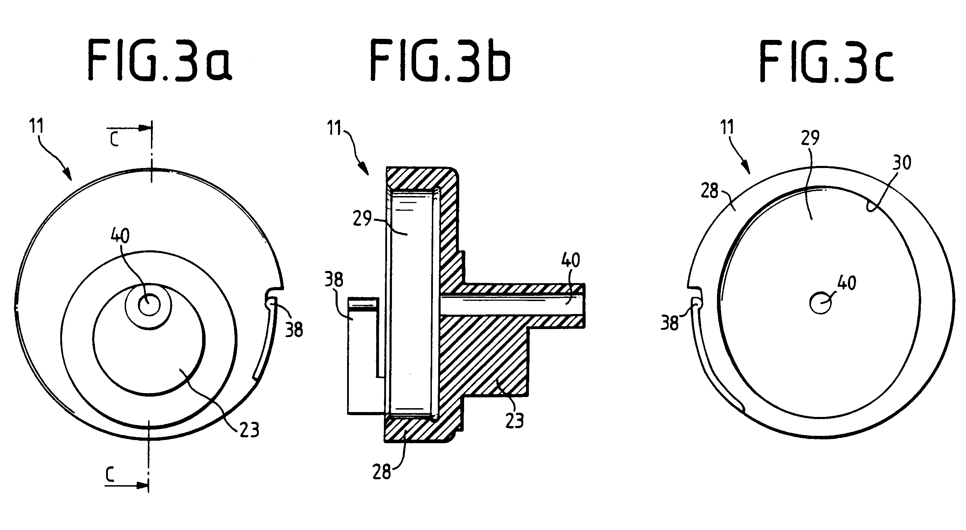

In Fig. 2 und 3 sind die erste Kupplungshälfte 10 und die zweite Kupplungshälfte 11 der Fig. 1 im Detail dargestellt und gleiche Elemente mit gleichen Bezugsziffern bezeichnet. Abweichend von Fig. 1 weist die erste Kupplungshälfte 10 anstelle des zylindrischen Zapfens 41 eine Doppel-L-förmige Erhöhung 42 auf, an deren kurzen Schenkeln 43, 44 dornartige Ansätze 34, 35 angeformt sind. Diese Ansätze 34, 35 dienen zur Halterung der als Zylinderdruckfedern ausgebildeten Federelemente 16, 17, von denen nur ein Federelement 17 zur Veranschaulichung dargestellt ist. Die bevorzugt als Zylinderwalzen ausgebildeten Mitnehmerelemente 13, 14 werden von den Federelementen 16, 17 beaufschlagt und stützen sich an den Endabschnitten 45, 46 der langen Schenkel der Erhöhung 42 ab. An der Außenwand der ersten Kupplungshälfte 10 ist eine nutförmige Ausnehmung 39 vorgesehen, die mit einem ratschenartigen Ansatz 38 an der zweiten Kupplungshälfte 11 zusammenwirkt. Im Fall, daß die Drehmoment-Begrenzungseinrichtung 15 die Kraftübertragung unterbricht, dreht sich die erste Kupplungshälfte 10 relativ zur ruhenden zweiten Kupplungshälfte 11. Bei jeder Umdrehung greift der ratschenartige Ansatz 38 in die Nut 39 ein und erzeugt ein schnarrendes Geräusch zusätzlich zum Stillstand des Bürstenkopfes 26, welches ebenfalls signalisiert, daß eine unsachgemäße Handhabung der Zahnbürste vorliegt.

Durch die Einfügung der Drehmoment-Begrenzungsvorrichtung 15 zwischen einer Antriebswelle des elektromotorischen Antriebselementes 12 und dem Bürstenkopf 26 wird somit zum einen das Antriebselement 12 vor Überlastung und andererseits der Benutzer der Zahnbürste vor den Folgen einer unsachgemäßen Handhabung, insbesondere eines zu hohen Anpreßdrucks des Bürstenkopfs 26 gegen die zu reinigenden Zähne, geschützt.

## Patentansprüche

1. Zahnbürste mit von einem elektromotorischen Antriebselement (12) bewegten Bürstenkopf (26) und mit einer zwischen einer Antriebswelle des elektromotorischen Antriebselementes (12) und dem Bürstenkopf (26) angeordneten mechanischen Drehmoment-Begrenzungseinrichtung (15), dadurch gekennzeichnet, daß die Drehmoment-Begrenzungseinrichtung (15) wenigstens ein durch ein Federelement (16, 17) in zu einer Drehachse (40) der Drehmoment-Begrenzungseinrichtung (15) im wesentlichen radialer Richtung beaufschlagtes Mitnehmerelement (13, 14) aufweist.

2. Zahnbürste nach Anspruch 1, dadurch gekennzeichnet, daß die Drehmoment-Begrenzungseinrichtung (15) eine erste Kupplungshälfte (10) und eine zweite Kupplungshälfte (11) aufweist, wobei der ersten Kupplungshälfte (10) das wenigstens eine Mitnehmerelement (13, 14) zugeordnet ist, welches gegen eine ringförmige Wand (28) der zweiten Kupplungshälfte (11) gedrückt wird.

3. Zahnbürste nach Anspruch 2, dadurch gekennzeichnet, daß die ringförmige Wand (28) die Seitenwand einer topfförmigen Ausnehmung (29) der zweiten Kupplungshälfte (11) bildet.

4. Zahnbürste nach Anspruch 2, dadurch gekennzeichnet, daß die ringförmige Wand (28) eine elliptische Innenumfangslinie (30) aufweist.

5. Zahnbürste nach Anspruch 2, dadurch gekennzeichnet, daß die erste Kupplungshälfte (10) eine im wesentlichen kreisförmige Außenumfangslinie (31) aufweist und daß die Mittelachse des wenigstens einen Mitnehmerelements (13, 14) und des zugeordneten Federelements (17, 16) mit einer nicht die Drehachse (40) schneidenden Kreissehne zur Deckung kommt.

6. Zahnbürste nach Anspruch 4, dadurch gekennzeichnet, daß die erste Kupplungshälfte (10) eine im wesentlichen kreisförmige Außenumfangslinie (31) aufweist und daß die Mittelachse des wenigstens einen Mitnehmerelements (13, 14) und des zugeordneten Federelements (17, 16) mit einer nicht die Drehachse (40) schneidenden Kreissehne zur Deckung kommt.

7. Zahnbürste nach Anspruch 1, dadurch gekennzeichnet, daß auf der ersten Kupplungshälfte (10) zwei Mitnehmerelemente (13, 14) mit zugeordneten Federelementen (16, 17) drehsymmetrisch (180°-Drehsymmetrie) angeordnet sind.

8. Zahnbürste nach Anspruch 1, dadurch gekennzeichnet, daß das Mitnehmerelement (13, 14) als Zylinderwalze ausgebildet ist.

9. Zahnbürste nach Anspruch 1, dadurch gekennzeichnet, daß das Federelement (16, 17) als Zylinderdruckfeder ausgebildet ist und an der Kupplungshälfte (10) durch einen dornartigen Ansatz (34, 35) gehalten ist.

10. Zahnbürste nach Anspruch 1, dadurch gekennzeichnet, daß der einen Kupplungshälfte (10, 11) ein ratschenartiger Ansatz (38) zugeordnet ist, der mit einer nutförmigen Ausnehmung (39) an der anderen Kupplungshälfte (11, 10) zur Geräuscherzeugung beim Wirksamwerden der Drehmoment-Begrenzungseinrichtung (15) zusammenwirkt.

## Claims

1. A toothbrush with a brush head (26) moved by an electric motor drive means (12), and with a mechanical torque limiting device (15) arranged between a drive shaft of the electric motor drive means (12) and the brush head (26), characterized in that the torque limiting device (15) includes at least one cam follower (13, 14) acted upon by a spring means (16, 17) in a direction substantially radial to a pivot (40) of the torque limiting device (15).

2. The toothbrush as claimed in claim 1, characterized in that the torque limiting device (15) includes a first coupling half (10) and a second coupling half (11), with the first coupling half (10) having associated to it at least one cam follower (13, 14) which is urged against an annular wall (28) of the second coupling half (11).

3. The toothbrush as claimed in claim 2, characterized in that the annular wall (28) forms the side wall of a cup-shaped recess (29) of the second coupling half (11).

4. The toothbrush as claimed in claim 2, characterized in that the annular wall (28) includes an elliptical inner periphery (30).

5. The toothbrush as claimed in claim 2, characterized in that the first coupling half (10) includes a substantially circular outer periphery (31), and that the center line of at least one cam follower (13, 14) and the associated spring means (17, 16) is congruent with a chord which does not intersect the pivot (40).

6. The toothbrush as claimed in claim 4, characterized in that the first coupling half (10) includes a substantially circular outer periphery (31), and that the center line of at least one cam follower (13, 14) and the associated spring means (17, 16) is congruent with a chord which does not intersect the pivot (40).

7. The toothbrush as claimed in claim 1, characterized in that two cam followers (13, 14) with their associated spring means (16, 17) are arranged on the first coupling half (10) in a rotational symmetry (rotational symmetry of 180°).

8. The toothbrush as claimed in claim 1, characterized in that the cam follower (13, 14) is configured as a cylindrical roll.

9. The toothbrush as claimed in claim 1, characterized in that the spring means (16, 17) is configured as a cylindrical compression spring and is held on the coupling half (10) by a mandrel-type projection (34, 35).

10. The toothbrush as claimed in claim 1, characterized in that one of the coupling halves (10, 11) is provided with a ratchet-type projection (38) which co-operates with a groove-shaped recess (39) on the other coupling half (11, 10) to produce a noise when the torque limiting device (15) takes effect.

## Revendications

1. Brosse à dents comportant une tête de brosse (26), mue par un élément d'actionnement (12) à moteur électrique, et un dispositif de limitation de couple (15) mécanique agencé entre un arbre d'actionnement de l'élément d'actionnement (12) à moteur électrique et la tête de brosse (26), caractérisée en ce que le dispositif de limitation de couple (15) présente au moins un élément d'entraînement (13, 14) sollicité par un élément de ressort (16, 17) dans une direction sensiblement radiale vers un arbre de rotation (40) du dispositif de limitation de couple (15).

2. Brosse à dents suivant la revendication 1, caractérisée en ce que le dispositif de limitation de couple (15) présente une première moitié d'accouplement (10) et une seconde moitié d'accouplement (11) et en ce qu'à la première moitié d'accouplement (10) est adjoint ledit au moins un élément d'entraînement (13, 14) qui est pressé contre une paroi annulaire (28) de la seconde moitié d'accouplement (11).

3. Brosse à dents suivant la revendication 2, caractérisée en ce que la paroi annulaire (28) forme la paroi latérale d'un évidement (29) en forme de pot de la seconde moitié d'accouplement (11).

4. Brosse à dents suivant la revendication 2, caractérisée en ce que la paroi annulaire (28) présente un tracé périphérique interne (30) elliptique.

5. Brosse à dents suivant la revendication 2, caractérisée en ce que la première moitié d'accouplement (10) présente un tracé périphérique externe (31) sensiblement circulaire et en ce que l'axe médian dudit au moins un élément d'entraînement (13, 14) et de l'élément de ressort adjoint (17, 16) est superposé à une corde de cercle qui ne coupe pas l'arbre de rotation (40).

6. Brosse à dents suivant la revendication 4, caractérisée en ce que la première moitié d'accouplement (10) présente un tracé périphérique externe (31) sensiblement circulaire et en ce que l'axe médian dudit au moins un élément d'entraînement (13, 14) et de l'élément de ressort (17, 16) adjoint est superposé à une corde de cercle qui ne coupe pas l'arbre de rotation (40).

7. Brosse à dents suivant la revendication 1, caractérisée en ce que deux éléments d'entraînement (13, 14) et des éléments de ressort (16, 17) adjoints sont agencés sur la première moitié d'accouplement (10) de façon symétrique par rotation (symétrie de rotation de 180°).

8. Brosse à dents suivant la revendication 1, caractérisée en ce que l'élément d'entraînement (13, 14) est réalisé sous la forme d'un rouleau cylindrique.

9. Brosse à dents suivant la revendication 1, caractérisée en ce que l'élément de ressort (16, 17) est réalisé sous la forme d'un ressort de compression cylindrique et en ce qu'il est maintenu sur la première moitié d'accouplement (10) par une pièce rapportée (34, 35) en un genre de broche.

10. Brosse à dents suivant la revendication 1, caractérisée en ce qu'à une des moitiés d'accouplement (10, 11) est adjointe une pièce rapportée (38), en un genre de cliquet, qui coopère avec un évidement (39) en forme de rainure sur l'autre moitié d'accouplement (11, 10), pour la production de bruit lorsque devient actif le dispositif de limitation de couple (15).
